# EUROPÄISCHE PATENTSCHRIFT

(11) **EP 1 453 372 B1**
(45) Veröffentlichungstag und Bekanntmachung des Hinweises auf die Patenterteilung: **14.02.2007**
(21) Anmeldenummer: 01274932.1
(22) Anmeldetag: 11.12.2001
(51) Int. Cl.: A01D 41/14

(54) **SCHNEIDWERK FÜR EINEN MÄHDRESCHER**
CUTTING UNIT FOR A HARVESTER-THRESHER
OUTIL DE COUPE DESTINE A UNE MOISSONNEUSE-BATTEUSE

(43) Veröffentlichungstag der Anmeldung: 08.09.2004
(73) Patentinhaber: Schrattenecker, Franz, A-4773 Eggerding (AT)
(72) Erfinder: Schrattenecker, Franz, A-4773 Eggerding (AT)
(74) Vertreter: Hübscher, Helmut
(86) Internationale Anmeldenummer: PCT/AT2001/000393
(87) Internationale Veröffentlichungsnummer: WO 2003/049532

(56) Entgegenhaltungen:
- EP-A- 0 250 649
- DE-A- 19 504 244
- DE-B- 1 237 374
- DE-C- 976 954
- US-A- 4 011 709

## Beschreibung

### Technisches Gebiet

Die Erfindung bezieht sich auf Schneidwerk für einen Mähdrescher mit einem eine Wanne aus einer Rückwand, zwei Seitenwänden und einem als Schneidtisch dienenden Boden bildenden Rahmen, der eingangsseitig der Wanne einen einstellbar eingesetzten Schneidbalken, in den Endbereichen des Schneidbalkens bzw. der Seitenwände Anschlußstellen zur Halterung von Halmteilern, Seitenschneidern od. dgl., oberhalb des Schneidbalkens eine über Stelltriebe verlagerbare Haspel und innerhalb der Wanne eine einer Durchgangsöffnung der Rückwand vorgeordnete Einzugsschnecke aufnimmt, wobei der Boden quergeteilt ist und sich zur Anpassung der Schneidtischlänge an die jeweiligen Mähverhältnisse aus einem rahmenfesten hinteren Bodenteil und einem in Fahrtrichtung relativ zum Rahmen schiebeverstellbar geführten vorderen Bodenteil zusammensetzt und beide Bodenteile einander dem Verstellweg entlang überlappen, wobei der vordere Bodenteil beim Verkürzen des Schneidtisches unter den hinteren Bodenteil einschiebbar ist.

### Stand der Technik

Ein gut abgestimmtes Schneidwerk ist Voraussetzung für einen ordnungsgemäßen Mähdrescherbetrieb, wobei Schneidbalken, Haspel und Einzugsschnecke hinsichtlich ihrer Leistung zu koordinieren und auf das jeweilige Erntegut abzustimmen sind, um das erforderliche einwandfreie Zusammenwirken beim Mähen und einen geordneten Guteinzug zu erreichen. Mitentscheidend für den Schneidwerksbetrieb ist die Lage des Schneidbalkens in Abhängigkeit von der Halmlänge des Schneidgutes bezüglich der Einzsugschnecke und der Haspel, da bei mangelhafter gegenseitiger Zuordnung von Schneidbalken, Haspel und Einzugsschnecke die Gefahr von Einzugsstörungen, Verstopfungen und Haufenbildungen besteht und zu beträchtlichen Dreschgutverlusten führt.

Zur geeigneten Anpassung des Schneidwerkes an verschiedene Erntegüter lassen sich daher die meisten Haspeln in ihrer Lage gegenüber der Einzugsschnecke verstellen und auch die Länge der durch den Boden der Schneidwerkswanne gebildeten Schneidtische entsprechend den jeweiligen Mähverhältnisse verändern. Dazu ist, wie beispielsweise aus der US 4 011 709 A, DE 34 07 812 A, DE 195 04 244 C oder der DE 195 08 887C hervorgeht, der Boden in einen hinteren rahmenfesten Bodenteil und einen vorderen, in Fahrtrichtung schiebeverstellbaren Bodenteil quergeteilt, wobei der vordere, den Schneidbalken tragende Bodenteil über geeignete Stelltriebe verstellbar ist und das Bodenblech des vorderen Bodenteiles die Oberseite des mit dem hinteren Bodenteil verbundenen Bodenbleches übergreift. Da der hintere Bodenteil eine die Einzugschnecke aufnehmende Mulde bildet, wird durch die Muldenkrümmung der Verstellweg des vorderen Bodenteiles beim Verkürzen des Schneidtisches relativ eng begrenzt, so daß insgesamt nur ein vergleichsweise beschränkter Verstellbereich für den Schneidtisch zur Verfügung steht. Eine Verlängerung des Schneidtisches über diesen verhältnismäßig kurzen Stellweg hinaus macht es erforderlich, daß der vordere Bodenteil nach einer Entriegelung entsprechend weit vorgefahren und der sich dadurch öffnende Zwischenraum zwischen vorderem und hinterem Bodenteil mit einer eigenen Zwischenbodenplatte überbrückt wird. Trotz der unbefriedigenden Anpassungsmöglichkeiten sind die bekannten Schneidwerke aber in Aufbau und Herstellung recht aufwendig und mit vergleichsweise hohen Fertigungskosten verbunden.

### Darstellung der Erfindung

Der Erfindung liegt daher die Aufgabe zugrunde, ein Schneidwerk der eingangs geschilderten Art zu schaffen, das sich durch seine funktionssichere, weitreichende Verstellbarkeit bei geringem, kostengünstigem Herstellungsaufwand auszeichnet.

Die Erfindung löst diese Aufgabe wahlweise dadurch, daß ein von der Vorderkante des hinteren Bodenteiles vorkragender Abstreifer als Übergang zwischen den beiden Bodenteilen vorgesehen ist oder daß der vordere Bodenteil wenigstens zwei einander übergreifende Bodenabschnitte umfaßt, die mittels teleskopartiger Führungsrohre gegeneinander und relativ zum hinteren Bodenteil schiebeverstellbar geführt sind.

Durch das Einschieben des vorderen Bodenteiles unter den hinteren Bodenteil zur Verkürzung der Schneidtischlänge wird auf besonders einfache und elegante Art von vornherein eine Beeinträchtigung des Verstellweges durch Mulde des hinteren Bodenteiles verhindert und im wesentlichen die Nutzung der ganzen Länge des hinteren Bodenteiles als Verstellweg für den vorderen Bodenteil ermöglicht. Dabei dient ein vom hinteren Bodenteil vorstehender Abstreifer als Übergang zwischen den beiden Bodenteilen und sorgt für einen einwandfreien Mähguteinzug.

Ein anderer Lösungsvorschlag zum Sicherstellen eines ausreichend großen Verstellbereiches ergibt sich durch die Aufteilung des vorderen Bodenteiles in einander übergreifende Bodenabschnitte, die über teleskopartige Führungsrohre entsprechend der sich summierenden Überlappungsbereiche zusammengeschoben bzw. auseinandergezogen werden können, so daß sich auch hier ohne zusätzliche Zwischenböden ein vergleichsweise großer Verstellbereich abdecken läßt.

Sind an den Unterseiten der über den hinteren Bodenteil vorkragenden Seitenwände Führungsschienen zur Führung des vorderen Bodenteiles angeordnet, läßt sich eine störungsfreie Verschiebebewegung des Bodens zur Schneidtischanpassung erreichen und gleichzeitig damit die gesamte Wannenkonstruktion versteifen.

Vorteilhaft ist es weiters, wenn am Rahmen bzw. hinteren Bodenteil über die Bodenbreite gleichmäßig verteilte und über den hinteren Bodenteil vorkragende Tragarme abgestützt sind, die in Stützprofile des vorderen Bauteiles eingreifen. Diese Tragarme bringen nicht nur eine zusätzliche Führung des vorderen Bodenteiles mit sich, sondern verringern vor allem auch die Gefahr einer Durchbiegung des Bodenteiles, auch wenn der Bodenteil z. B. in Leichtbauweise hergestellt ist.

Zur Anpassung des Schneidwerkes an unterschiedliches Mähgut ist es notwendig, bei Bedarf die Haspellage in Abhängigkeit von der Schneidtischlänge zu verändern. Um dabei eine möglichst einfache Lageabstimmung zu erreichen, bilden die Seitenwände im Verstellbereich des vorderen Bodenteiles eine obere bodenparallele Führungskante und sind mit dem vorderen Bodenteil der Führungskante entlang verschiebbare Steuernocken verbunden, mit welchen Führungskanten bzw. mit welchen Steuernocken eine an einem Schwenkarm für die Haspellagerung angeordnete Steuerrolle zur Lageverstellung der Haspel zusammenwirkt. Diese Haspellagensteuerung ermöglicht auf einfache, mechanische Weise eine selbsttätige Abstimmung der Haspellage an die Schneidbalkenlage bzw. die Schneidtischlänge, da die Steuerrollen mit den die Haspel aufnehmenden Schwenkarmen so lange auf den Führungskanten aufruhen und die Schwenkarme in der gerade vorhandenen Position halten, bis durch eine Verstellbewegung des vorderen Bodenteiles die Steuernocken in den Bereich der Steuerrollen verschoben werden und dann die der Steuerbahn der Steuernocken entlang abrollenden Steuerrollen gegenüber den Führungskanten mehr oder weniger angehoben und wieder abgesenkt werden, womit sich gleichzeitig und zwangsweise auch die Haspellage bestimmt.

Nach einer besonders günstigen Ausgestaltung der Erfindung sind am einzugsseitigen Ende der Seitenwände im Unterkantenbereich Anschlußstellen für Seitenschneider vorgesehen, die in den Anschlußstellen um eine schneidbalkenparallele Achse schwenkverstellbar lagern und mittels koaxial zum Seitenschneider verschwenkbar abgestützter, fächerförmig angeordneter Zwischenbleche mit den Seitenwänden in Verbindung stehen, wobei die hochgeschwenkten Seitenschneider über eine Sicherungsstange gegenüber den Seitenwänden abstützbar sind. Es kommt zu einer Kombination aus Schneidbalken und Seitenschneider, wobei die Seitenschneider mit wenigen Handgriffen aus einer abgeklappten Außerbetriebstellung in eine Schneidstellung gebracht und in dieser Schneidstellung durch Verriegeln mit einer Sicherungsstange fixiert werden können. Die mit den Seitenschneidern mitverschwenkbaren Zwischenbleche ergeben eine Schneidwerksversteifung und gewährleisten nicht zuletzt einen einwandfreien Ernteguteinzug.

### Kurze Beschreibung der Zeichnung

In der Zeichnung ist der Erfindungsgegenstand anhand reiner Funktionsschemata beispielsweise veranschaulicht, und zwar zeigen

### Weg zur Ausführung der Erfindung

- Fig. 1 und 2: ein erfindungsgemäßes Schneidwerk in Seitenansicht und Vorderansicht,
- Fig. 3, 4 und 5: einen Teil dieses Schneidwerkes mit Seitenschneidern und einem Messerantrieb in Seitenansicht bei eingefahrenem bzw. ausgefahrenem Boden und in Schneidstellung hochgeschwenkten Seitenschneidern bzw. mit in Außerbetriebstellung abgeschwenkten Seitenschneidern und ausgefahrenem **Boden sowie**
- Fig. 6 und 7: den Bodenbereich eines etwas abgeänderten Ausführungsbeispieles des Schneidwerkes in Seitensicht.

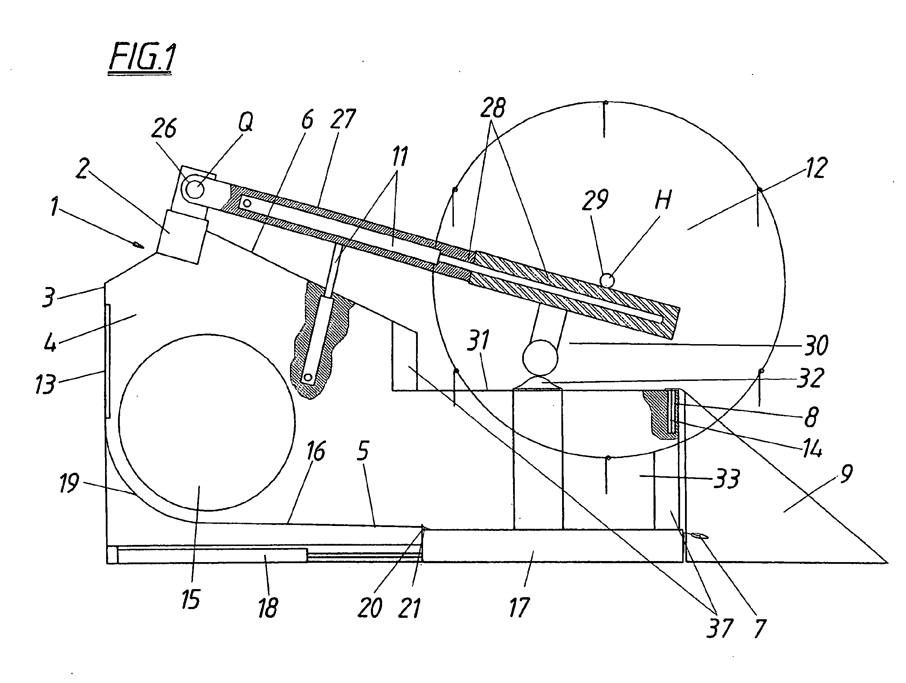

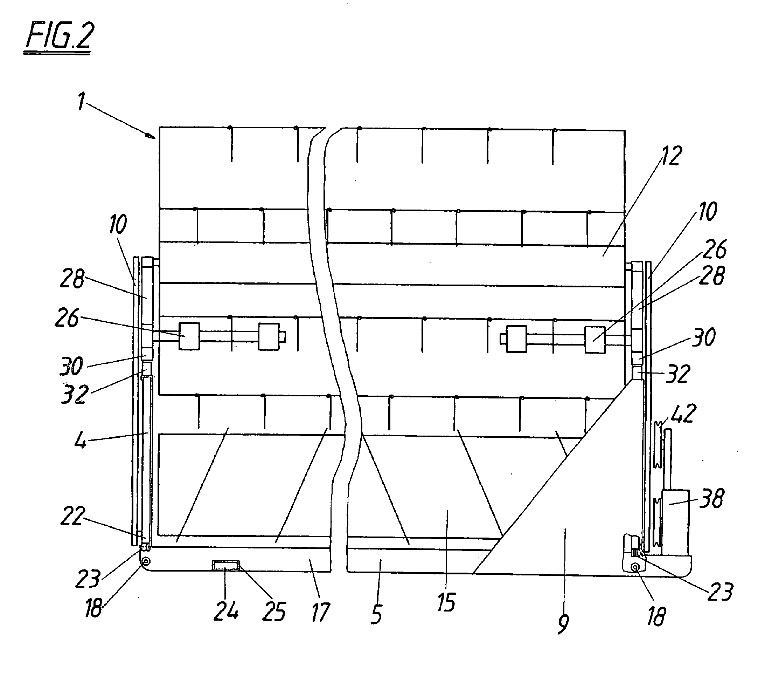

Ein Schneidwerk 1 für einen nicht weiter dargestellten Mähdrescher umfaßt einen Rahmen 2, der mit einer Rückwand 3, zwei Seitenwänden 4 und einen als Schneidtisch dienenden Boden 5 eine Wanne 6 bildet und eingangsseitig der Wanne 6 einen einstellbar eingesetzten Schneidbalken 7, im Schneidbalkenbereich bzw, im vorderen Endbereich der Seitenwände 4 Anschlußstellen 8 mit vertikalen Lagerzapfen 14 zur Halterung von Halmteilern 9, Seitenschneidern 10 od. dgl., oberhalb des Schneidbalkens 7 eine über Stelltriebe 11 verlagerbare Haspel 12 und innerhalb der Wanne 6 eine einer Durchgangsöffnung 13 der Rückwand 3 vorgeordnete Einzugsschnecke 15 aufnimmt. Um die Lage des Schneidbalkens 7 in Abhängigkeit von den Halmlängen des jeweiligen Erntegutes auf die Lage der Einzugsschnecke 15 und der Haspel 12 abstimmen zu können, ist der Boden 5 quergeteilt und setzt sich aus einem rahmenfesten hinteren Bodenteil 16 und einem in Fahrtrichtung relativ zum Rahmen 2 schiebeverstellbar geführten vorderen Bodenteil 17 zusammen, so daß sich durch eine Schiebeverstellung des vorderen Bodenteils 17 die Länge des Schneidtisches und damit auch die Position des am vorderen Bodenteil 17 angeordneten Schneidbalkens 7 ändern. Diese Längenänderung des Bodens 5 sowie die Verstellbarkeit der Haspellage in Höhen- und Bodenlängsrichtung erlauben dann die Abstimmung des Schneidwerkes 1 an das zu mähende Erntegut. Die Halmteiler 9 sind mühelos an den Anschlußstellen 8 anzulenken und können wegen ihrer Verschwenkbarkeit mit einem Griff aus einer Funktionsstellung (Fig. 1) in eine Transportstellung (Fig. 2) verstellt oder bedarfsweise überhaupt abgenommen werden (linke Seite der Fig. 2).

Zur Verstellung der hinteren bzw. vorderen Bodenteile 16, 17 sind im Bereich des hinteren Bodenteils 16 in Fahrtrichtung sich erstreckende Hydraulikzylinder 18 vorgesehen, mit denen sich der vordere Bodenteil 17 relativ zum hinteren Bodenteil 16 verschieben läßt. Dabei wird der vordere Bodenteil 17 beim Verkürzen des Schneidtisches unter den hinteren Bodenteil 16 eingezogen, wodurch der Verstellbereich keine Beeinträchtigung durch die vom hinteren Bodenteil 16 an der Oberseite gebildete Mulde 19 für die Einzugsschnecke 15 erleidet. Ein von der Vorderkante 20 des hinteren Bodenteils 16 vorkragender Abstreifer 21 dient als Übergang zwischen hinterem und vorderem Bodenteil 16, 17, wodurch ein ordnungsgemäßer Ernteguteinzug sichergestellt ist.

Zur einwandfreien Führung des vorderen Bodenteils 17 sind an den Unterseiten 22 der über den hinteren Bodenteil 16 vorkragenden Seitenwände 4 Führungsschienen 23 angeordnet, in denen der vordere Bodenteil 17 entlang des gesamten Verstellweges geführt ist. Unterhalb der Führungsschienen 23 ist im Bodenteil 17 eine Aufnahme für die Hydraulikzylinder 18 vorbereitet, so daß kein zu starker Versatz zwischen Führungsschienen 23 und Hydraulikzylindern 18 und damit keine Klemmgefahr od. dgl. entstehen.

Zur Versteifung des vorderen Bodenteils 17 und zur Vermeidung einer zu starken Durchbiegung dieses Bodenteils stützen sich am Rahmen 2 bzw. am hinteren Bodenteil 16 über den hinteren Bodenteil 16 vorkragende Tragarme 24 ab, die in zugehörige Stützprofile 25 des vorderen Bodenteils 17 eingreifen.

Zur Haspellagerung gibt es am Rahmen 2 Lagerstellen 26 für zur Haspelachse H parallele Querachsen Q verschwenkbar angelenkte Schwenkarme 27, die über die Stelltriebe 11 hinsichtlich einer Schwenkverstellung bzw. einer teleskopartigen Längenverschiebung beaufschlagbar sind. Am vorderen Teil 28 der Schwenkarme 27 sitzt die Lagerung 29 der Haspel 12, wobei dieser vordere Teil 28 auch eine abwärtsragende Steuerrolle 30 aufweist. Um eine einfache, mechanische Begrenzung der Verstellbewegung der Haspel 12 zu erreichen, bilden die Seitenwände 4 im Verstellbereich des vorderen Bodenteils eine obere bodenparallele Führungskante 31, der entlang mit dem vorderen Bodenteil 17 verbundene Steuernocken 32 verschiebbar ist, so daß je nach Verstellweg des vorderen Bodenteils 17 die Steuerrolle 30 entweder mit der Führungskante 31 oder mit der Steuernocke 32 zusammenwirken und demgemäß die Haspellage angehoben oder gleichbelassen wird. Damit kann die optimale Haspelhöhe, die in Schneidbalkennähe durch die Steuernocken 32 vorgegeben ist, bestimmt und ein Unterschreiten dieser Haspelhöhe sich vermieden werden.

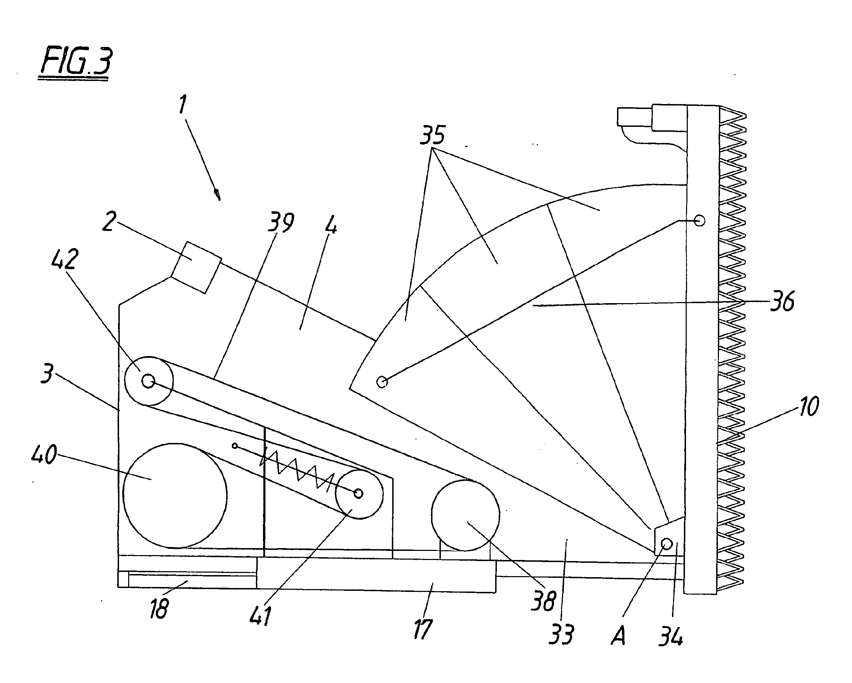

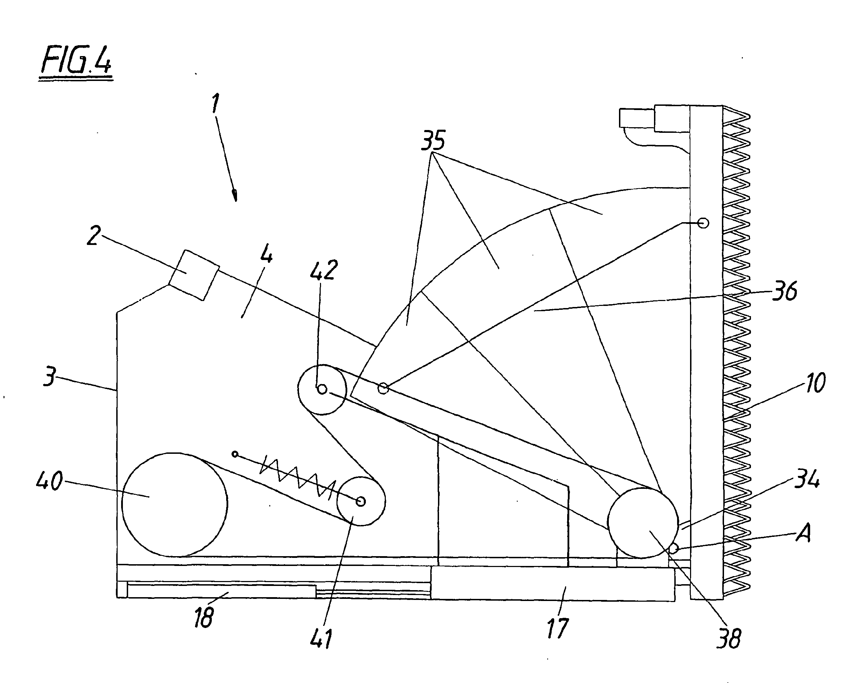

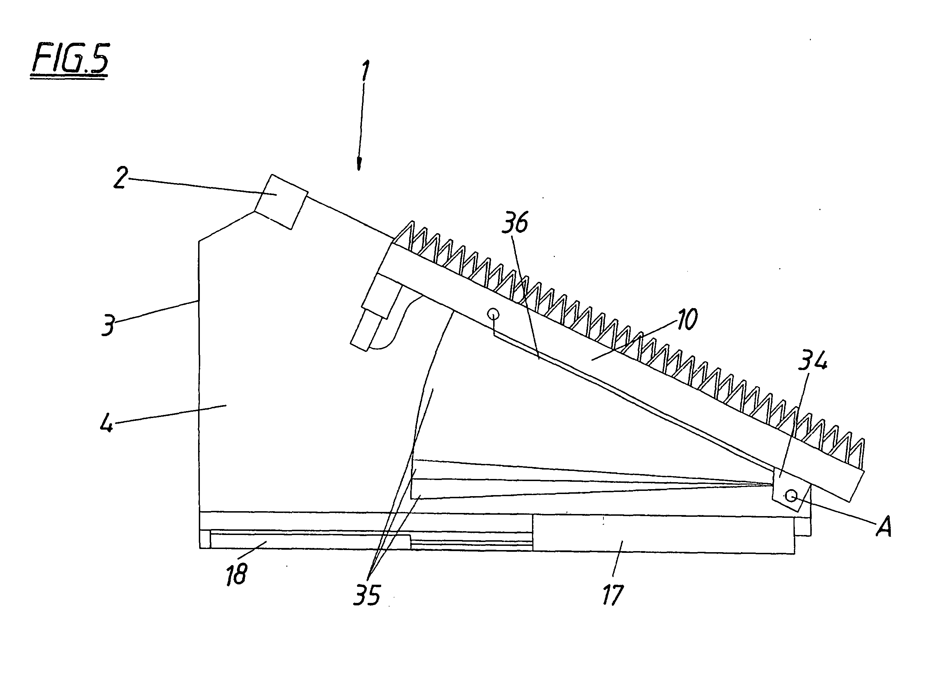

Zum Bestücken des Schneidwerkes 1 mit Seitenschneidern, sind am einzugsseitigen Ende 33 der Seitenwände 4 im Unterkantenbereich Anschlußstellen 34 vorgesehen, in denen die Seitenschneider 10 um eine schneidbalkenparallele Achse A schwenkverstellbar gelagert und mittels koaxial zum Seitenschneider 10 verschwenkbar abgestützter, fächerförmig angeordneter Zwischenbleche 35 mit den Seitenwänden 4 verbunden sind, wobei die hochgeschwenkten Seitenschneider 10 über eine Sicherungsstange 36 gegenüber den Seitenwänden 4 fest und sicher abgestützt werden. So lassen sich die Seitenschneider 10 mit wenigen Handgriffen aus einer Außerbetriebsstellung (Fig. 5) in eine Schneidstellung (Fig. 3 und 4) hochschwenken und die Seitenschneider 10 in kürzester Zeit zum Einsatz bringen, wobei zur Erreichung eines guten Flusses des Erntegutes nach dem Schnitt durch die Seitenschneider 10 die Seitenwände 4 im Übergangsbereich zwischen hinterem und vorderem Bodenteil mit jeweils um ca. 45° nach innen weisenden Wandabschnitten 37 ausgestattet sind.

Das Getriebe 38 des Schneidwerksantriebes ist fest am vorderen Bodenteil 17 montiert. Der vorgesehene Keilriemen 39 läuft über die Antriebsscheibe 40 zur Federspannrolle 41, wobei Antriebsscheibe 40 und Federspannrolle 41 fest an einer Seitenwand 4 gelagert sind, und der Keilriemen 39 ist anschließend über eine fest am vorderen Bodenteil 17 abgestützte Spannrolle 42 zum Getriebe 38 geführt, so daß eine Verstellung des Bodens 5 und die sich dabei ergebenden unterschiedlichen Abstände zwischen Getriebe 38 und Antriebsscheibe 40 schwierigkeitslos ausgeglichen werden können.

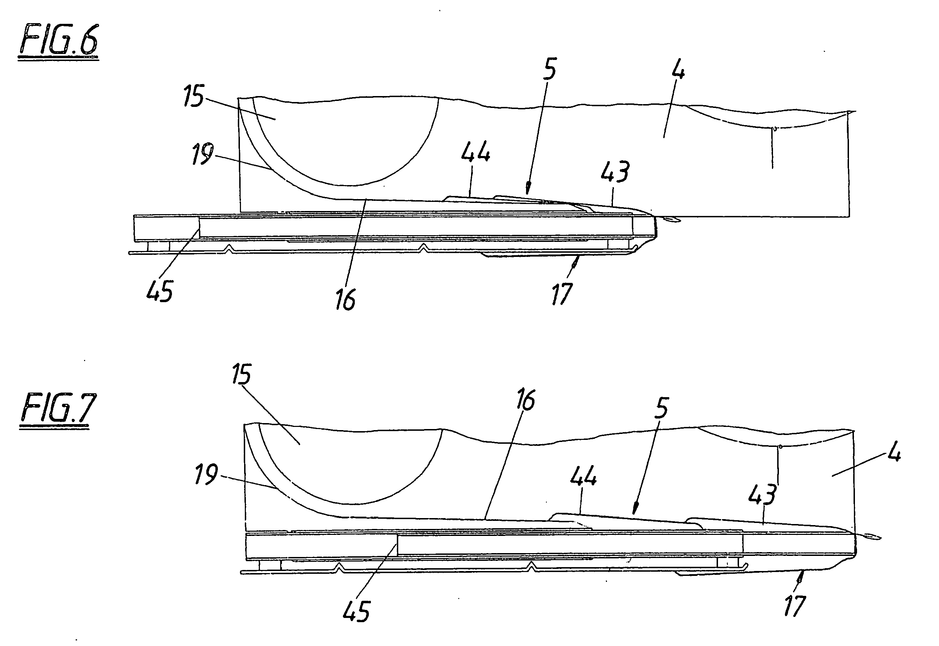

Wie beim Ausführungsbeispiel nach Fig. 6 und 7 angedeutet, kann der Boden 5 der Schneidwerkswanne 6 auch jalousieartig ausgebildet sein, um den Verstellbereich des Schneidtisches abzudecken. Dazu umfaßt der vordere Bodenteil 17 wenigstens zwei einander übergreifende Bodenabschnitte 43, 44, die mittels teleskopartiger Führungsrohre 45 gegeneinander und relativ zum hinteren Bodenteil 16 schiebeverstellbar geführt sind.

## Patentansprüche

1. Schneidwerk (1) für einen Mähdrescher mit einem eine Wanne (6) aus einer Rückwand (3), zwei Seitenwänden (4) und einem als Schneidtisch dienenden Boden (5) bildenden Rahmen (2), der eingangsseitig der Wanne einen einstellbar eingesetzten Schneidbalken (7), in den Endbereichen des Schneidbalkens bzw. der Seitenwände (4) Anschlußstellen zur Halterung von Halmteilern (9), Seitenschneidern (10) od. dgl., oberhalb des Schneidbalkens (7) eine über Stelltriebe (11) verlagerbare Haspel (12) und innerhalb der Wanne (6) eine einer Durchgangsöffnung der Rückenwand vorgeordnete Einzugsschnecke (15) aufnimmt, wobei der Boden (5) quergeteilt ist und sich zur Anpassung der Schneidtischlänge an die jeweiligen Mähverhältnisse aus einem rahmenfesten hinteren Bodenteil (16) und einem in Fahrtrichtung relativ zum Rahmen schiebeverstellbar geführten vorderen Bodenteil (16) zusammensetzt und beide Bodenteile einander dem Verstellweg entlang überlappen, wobei der vordere Bodenteil (17) beim Verkürzen des Schneidtisches unter den hinteren Bodenteil (16) einschiebbar ist, **dadurch gekennzeichnet, daß** ein von der Vorderkante (20) des hinteren Bodenteils (16) vorkragender Abstreifer (21) als Übergang zwischen den beiden Bodenteilen (16, 17) vorgesehen ist.

2. Schneidwerk (1) für einen Mähdrescher mit einem eine Wanne (6) aus einer Rückwand (3), zwei Seitenwänden (4) und einem als Schneidtisch dienenden Boden (5) bildenden Rahmen (2), der eingangsseitig der Wanne einen einstellbar eingesetzten Schneidbalken (7), in den Endbereichen des Schneidbalkens bzw. der Seitenwände (4) Anschlußstellen zur Halterung von Halmteilern (9), Seitenschneidern (10) od. dgl., oberhalb des Schneidbalkens (7) eine über Stelltriebe (11) verlagerbare Haspel (12) und innerhalb der Wanne (6) eine einer Durchgangsöffnung der Rückenwand vorgeordnete Einzugsschnecke (15) aufnimmt, wobei der Boden (5) quergeteilt ist und sich zur Anpassung der Schneidtischlänge an die jeweiligen Mähverhältnisse aus einem rahmenfesten hinteren Bodenteil (16) und einem in Fahrtrichtung relativ zum Rahmen schiebeverstellbar geführten vorderen Bodenteil (16) zusammensetzt und beide Bodenteile einander dem Verstellweg entlang überlappen, **dadurch gekennzeichnet, daß** der vordere Bodenteil (17) wenigstens zwei einander übergreifende Bodenabschnitte (43, 44) umfaßt, die mittels teleskopartiger Führungsrohre (45) gegeneinander und über den hinteren Bodenteil (16) schiebeverstellbar geführt sind.

3. Schneidwerk nach Anspruch 1 oder 2, **dadurch gekennzeichnet, daß** an den Unterseiten (22) der über den hinteren Bodenteil (16) vorkragenden Seitenwände (4) Führungsschienen (23) zur Führung des vorderen Bodenteils (17) angeordnet sind.

4. Schneidwerk nach einem der Ansprüche 1 bis 3, **dadurch gekennzeichnet, daß** am Rahmen (2) bzw. hinteren Bodenteil (16) über die Bodenbreite gleichmäßig verteilte und über den hinteren Bodenteil (16) vorkragende Tragarme (24) abgestützt sind, die in Stützprofile (15) des vorderen Bodenteils (17) eingreifen.

5. Schneidwerk nach einem der Ansprüche 1 bis 4, **dadurch gekennzeichnet, daß** die Seitenwände (4) im Verstellbereich des vorderen Bodenteils (17) eine obere bodenparallele Führungskante (31) bilden und mit dem vorderen Bodenteil (17) der Führungskante (31) entlang verschiebbare Steuernocken (32) verbunden sind, mit welchen Führungskanten (31) bzw. welchen Steuernocken (32) eine an einem Schwenkarm (27) zur Haspellagerung angeordnete Steuerrolle (30) zur Lageverstellung der Haspel (12) zusammenwirkt.

6. Schneidwerk nach einem der Ansprüche 1 bis 5, **dadurch gekennzeichnet, daß** am einzugsseitigen Ende (33) der Seitenwände (4) im Unterkantenbereich Anschlußstellen (34) für Seitenschneider (10) vorgesehen sind, die in den Anschlußstellen (34) um eine schneidbalkenparallele Achse (A) schwenkverstellbar lagern und mittels koaxial zum Seitenschneider (10) verschwenkbar abgestützter, fächerförmig angeordneter Zwischenbleche (35) mit den Seitenwänden (4) in Verbindung stehen, wobei die hochgeschwenkten Seitenschneider (10) über eine Sicherungsstange (36) gegenüber den Seitenwänden (4) abstützbar sind.

## Claims

1. Cutting unit (1) for a combine harvester with a frame (2) forming a pan (6), comprising a rear wall (3), two side walls (4) and a bottom (5) serving as a cutting table, said frame receiving a cutter bar (7) inserted in an adjustable way on the feed side of the pan, connecting points for holding stalk dividers (9), side cutters (10) or similar in the end regions of the cutter bar or the side walls (4), a reel (12) which can be displaced through actuators (11) above the cutter bar (7) and a feed auger (15) arranged before a passage opening of the rear wall within the pan (6), whereby the bottom (5) is divided transversely and comprises, for the adaptation of the cutting table length to the respective reaping conditions, a frame-solid rear bottom part (16) and a front bottom part (16) guided so as to be slideably displaceable in the direction of travel relative to the frame, and both bottom parts overlap each other along the displacement path, whereby the front bottom part (17), upon shortening of the cutting table, can be inserted below the rear bottom part (16), **characterised in that** a stripper (21) projecting from the front edge (20) of the rear bottom part (16) is provided as a crossover area between the two bottom parts (16, 17).

2. Cutting unit (1) for a combine harvester with a frame (2) forming a pan (6), comprising a rear wall (3), two side walls (4) and a bottom (5) serving as a cutting table, said frame receiving a cutter bar (7) inserted in an adjustable way on the feed side of the pan, connecting points for holding stalk dividers (9), side cutters (10) or similar in the end regions of the cutter bar or the side walls (4), a reel (12) which can be displaced through actuators (11) above the cutter bar (7) and a feed auger (15) arranged before a passage opening of the rear wall within the pan (6), whereby the bottom (5) is divided transversely and comprises, for the adaptation of the cutting table length to the respective reaping conditions, a frame-solid rear bottom part (16) and a front bottom part (16) guided so as to be slideably displaceable in the direction of travel relative to the frame, and both bottom parts overlap each other along the displacement path, **characterised in that** the front bottom part (17) comprises at least two overlapping bottom portions (43, 44) which are guided so as to be slideably displaceable by means of telescopic guide tubes (45) against each other and via the rear bottom part (16).

3. Cutting unit according to claim 1 or 2, **characterised in that** guide rails (23) for guiding the front bottom part (17) are arranged on the lower sides (22) of the side walls (4) projecting over the rear bottom part (16).

4. Cutting unit according to one of the claims 1 to 3, **characterised in that** on the frame (2) or rear bottom part (16) carrying arms (24) distributed evenly over the width of the bottom and projecting over the rear bottom part (16) are supported, said carrying arms (24) engaging in support profiles (15) of the front bottom part (17).

5. Cutting unit according to one of the claims 1 to 4, **characterised in that** the side walls (4) in the displacement area of the front bottom part (17) form a guiding edge (31) parallel to the bottom and are connected with the front bottom part (17) of the guiding edge (31) along displaceable control cams (32), with which guiding edges (31) or control cams (32) a control roller (30) arranged on a pivot arm (27) for reel adjustment cooperates for the adjustment of the position of the reel (12).

6. Cutting unit according to one of the claims 1 to 5, **characterised in that** on the feed-side end (33) of the side walls (4) in the lower edge region connecting points (23) are provided for side cutters (10) which are mounted in the connecting points (34) so as to be pivotably displaceable about an axis (A) parallel to the cutter bar and are connected to the side walls (4) by means of intermediate panels (35) arranged in a fan formation and supported so as to be pivotable coaxially with the side cutters (10), whereby the upwardly pivoted side cutters (10) can be supported via a safety rod (36) in relation to the side walls (4).

## Revendications

1. Outil de coupe (1) pour une moissonneuse batteuse, avec un cadre (2) formant une auge (6), composée d'une paroi arrière (3), de deux parois latérales (4) et d'un fond (5) servant de table de coupe, cadre qui, du côté entrée de l'auge, supporte une poutre de coupe (7) utilisée de façon réglable, dans les zones d'extrémité de la poutre de coupe, ou des parois latérales (4), des points de raccordement pour la fixation de diviseurs (9), de découpeurs latéraux (10) ou analogues, au-dessus de la poutre de coupe (7) un rabatteur (12) déplaçable par des transmissions de réglage (11) et, à l'intérieur de l'auge (6), une vis d'introduction (15) disposée en amont d'une ouverture de passage de la paroi arrière ; le fond (5) étant divisé transversalement et se composant, pour l'adaptation de la longueur de la table de coupe aux conditions de récolte respectives, d'une partie de fond arrière (16) fixée au cadre, et d'une partie fond avant (16) guidée de façon réglable en coulissement par rapport au cadre, dans la direction de roulage, et les deux parties de fond chevauchant entre elles la course de réglage, la partie de fond avant (17), lors du raccourcissement de la table de coupe, étant rétractable sous la partie de fond arrière (16), **caractérisé en ce qu'**un dévêtisseur (21), faisant saillie devant l'arête avant (20) de la partie de fond arrière (16), est prévu en tant que transition entre les deux parties de fond (16, 17).

2. Outil de coupe (1) pour une moissonneuse batteuse, avec un cadre (2) formant une auge (6), composée d'une paroi arrière (3), de deux parois latérales (4) et d'un fond (5) servant de table de coupe, cadre qui, du côté entrée de l'auge, supporte une poutre de coupe (7) utilisée de façon réglable, dans les zones d'extrémité de la poutre de coupe, ou des parois latérales (4), des points de raccordement pour la fixation de diviseurs (9), de découpeurs latéraux (10) ou analogues, au-dessus de la poutre de coupe (7) un rabatteur (12) déplaçable par des transmissions de réglage (11) et, à l'intérieur de l'auge (6), une vis d'introduction (15) disposée en amont d'une ouverture de passage de la paroi arrière ; le fond (5) étant divisé transversalement et se composant, pour l'adaptation de la longueur de la table de coupe aux conditions de récolte respectives, d'une partie de fond arrière (16) fixée au cadre, et d'une partie fond avant (16) guidée de façon réglable en coulissement par rapport au cadre, dans la direction de roulage, et les deux parties de fond chevauchant entre elles la course de réglage, **caractérisé en ce que** la partie de fond avant (17) comprend au moins deux tronçons de fond (43, 44) se recouvrant l'un l'autre, guidés de façon réglable en coulissement, l'un par rapport à l'autre et au-dessus de la partie de fond arrière (16), à l'aide de tubes de guidage (45) télescopiques.

3. Outil de coupe selon la revendication 1 ou 2, **caractérisé en ce que** sur les faces inférieures (22) des parois latérales (4), en saillie sur la partie de fond arrière (16), sont disposées des glissières de guidage (23), devant assurer le guidage de la partie de fond avant (17).

4. Outil de coupe selon l'une des revendications 1 à 3, **caractérisé en ce que** des bras support (24), répartis régulièrement, sur la largeur du fond, et en saillie sur la partie de fond arrière (16), sont soutenus sur le cadre (2) ou la partie de fond arrière (16) et s'engagent dans des profilés d'appui (15) de la partie de fond avant (17).

5. Outil de coupe selon l'une des revendications 1 à 4, **caractérisé en ce que** les parois latérales (4), dans la zone de manoeuvre de la partie de fond avant (17), forment une arête de guidage (31) supérieure parallèle au sol, et sont reliées à la partie de fond avant (17) de l'arête de guidage (31) le long de cames de commande (32) déplaçables, arêtes de guidage (31) ou cames de commande (32) avec lesquelles coopère un rouleau de commande (30), disposé sur un bras pivotant (27), pour assurer le montage en palier du rabatteur, pour obtenir le réglage de position du rabatteur (12).

6. Outil de coupe selon l'une des revendications 1 à 5, **caractérisé en ce que**, à l'extrémité (33), située du côté introduction, des parois latérales (4) dans la zone d'arête inférieure, sont prévus des points de raccordement (34), qui servent de montage en palier à des découpeurs latéraux (10), avec possibilité de pivotement autour d'un axe (A), parallèle à la poutre de coupe, dans les points de raccordement (34), et sont reliés aux parois latérales (4) au moyen de tôles intermédiaires (35), disposées en éventail et soutenues de façon à pouvoir pivoter par rapport aux découpeurs latéraux (10), les découpeurs latéraux (10), ayant été relevés par pivotement, étant susceptibles d'être soutenus par rapport aux parois latérales (4), par l'intermédiaire d'une barre de sécurité (36).
